# EUROPEAN PATENT SPECIFICATION

(11) **EP 1 747 861 B1**
(45) Date of publication and mention of the grant of the patent: **10.09.2008**
(21) Application number: 06112517.5
(22) Date of filing: 12.04.2006
(51) Int. Cl.: F01N 3/28

(54) **Punching die for manufacturing exhaust gas purifier holding seal member and method for manufacturing holding seal member with punching die**
Stanzmesser zur Herstellung von Halte- und Dichtelemente für Abgasreinigungsanlagen und Methode zur Herstellung von Halte- und Dichtelemente mittels eines Stanzmessers
Matrice de poinçonnage pour la fabrication d'un élément de retenue et d'étantchéité pour un purificateur d'échappement et méthode de fabrication d'un élément de retenue et d'étantchéité avec une matrice de poinçonnage

(30) Priority: 25.07.2005 JP 2005215052
(43) Date of publication of application: 31.01.2007
(73) Proprietor: IBIDEN CO., LTD., Gifu, Ogaki 503-8604 (JP)
(72) Inventor: Osumi, Shiro c/o IBIDEN CO., LTD., Takahama, Aichi 441-1301 (JP)
(74) Representative: HOFFMANN EITLE

(56) References cited:
- DE-A1- 2 610 628
- DE-U1- 9 303 159
- DE-U1- 20 317 993
- JP-A- 2002 011 697
- US-A- 5 676 032

## Description

The present invention relates to use of a punching die for use in manufacturing a holding seal member for winding around an exhaust gas purifier body, and to a manufacturing method for a holding seal member employing such a punching die.

An exhaust gas treatment apparatus for use in a vehicle is normally located in the middle of an exhaust passage in a vehicle. A diesel particulate filter (DPF) and an exhaust gas purifying catalyst converter, which removes graphite particles referred to as particulates, are known in the prior art as examples of an exhaust gas treatment apparatus. A typical exhaust gas treatment apparatus includes an exhaust gas purifier body, a metal pipe (shell) enclosing the exhaust gas purifier body, and a holding seal member filling the gap between the exhaust gas purifier body and the metal pipe.

The holding seal member must function to prevent the exhaust gas purifier body from being broken when hit against the metal pipe due to vibrations of the vehicle. The holding seal member must also function to prevent the exhaust gas purifier body from falling off from the metal pipe or dislodging in the metal pipe when subjected to exhaust gas pressure. Further, the holding seal member must prevent the exhaust gas from leaking out of the gap between the metal pipe and the exhaust gas purifier body.

A conventional holding seal member is produced by cutting a fiber mat having a uniform thickness (refer to JP-A-2001-316965). Scissors, knives, or punching blades (Thomson blades) are used for cutting the fiber mat.

The use of scissors or knives requires a long time for cutting a holding seal member out of a sheet of fiber mat. When using punching blades to cut out a holding seal member, the cut-out holding seal member tends to be caught between the punching blades. It takes a long time to remove such a caught holding seal member from the punching blades. Moreover, the holding seal member may be damaged during the removal. Further, it takes time and trouble to neatly arrange the holding seal members so that the holding seal members can be shipped out of the factory.
US 5,676,032 shows a steel rule cutting die for cutting fixed patterns in a single or plurality of stacked material layers according to the shape of the steel rule. The die is described as suitable for cutting cloth, cloth-like materials natural materials and synthetic materials such as vinyl and other materials.
DE 203 17 993 shows a punching die described as suitable for cutting board and corrugated paper board.
DE 26 10 628 describes a punching die suitable for non-elastic core materials for sandwich construction elements.
DE 93 03 159.9 describes a punching die suitable for cutting board and paper.
WO 99/25964 which is regarded to be the closest prior art discloses a die having a base and a cavity defined by a die perimeter. Within the cavity is a foamed material. A die-cat mounting article may easily be removed from the die due to the foamed and resilient ejection material.

One aspect of the present invention is the use of a punching die for punching a sheet of an inorganic fiber mat to manufacture a plurality of holding seal members,

In one embodiment, the elastic members are made of a foam material.

In one embodiment, the foam material is made of at least one selected from the group consisting of polyurethane foam, polyester foam, melamine resin foam, phenolic resin foam, polyethylene foam, polypropylene foam, polystyrene foam, natural rubber foam, synthetic rubber foam, and elastomer foam.

In one embodiment, the elastic members have a thickness equal to or greater than the height of the punching blades.

The inorganic fiber mat may be made of alumina fibers.

In one embodiment, the punching blade and the elastic members are arranged to face a support table supporting the inorganic fiber mat, and the punching blade cuts the inorganic fiber mat held between the elastic members and the support table, and wherein the cut inorganic fiber mat is still held between the elastic members and the support table by the time the punching blade has been moved away from the inorganic fiber mat.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which
Fig. 1A is a bottom view of a punching die for use according to a preferred embodiment of the present invention;
Fig. 1B is a partially enlarged view of Fig. 1A;
Fig. 2 is a cross-sectional view taken along line 2-2 in Fig. 1A.
Figs. 3A to 3D are cross-sectional views showing the punching of an inorganic fiber mat with the punching die shown in Fig. 1A;
Fig. 4 is a partially cutaway perspective view of an exhaust gas purifier assembly having a holding seal member of the preferred embodiment.

A punching die 11 for use according to a preferred embodiment of the present invention will now be described with reference to the accompanying drawings.

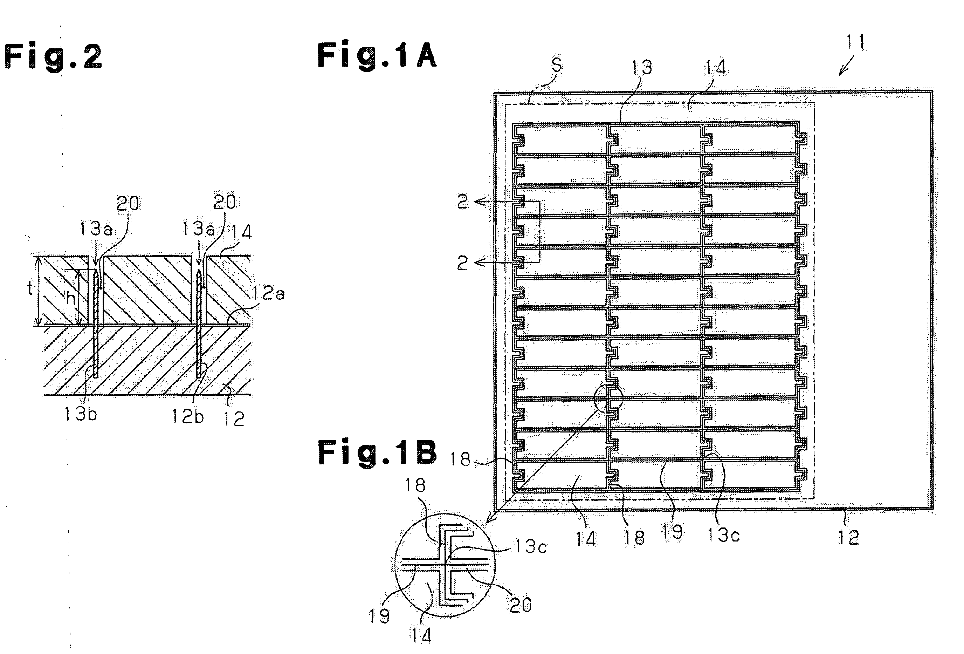

As shown in Fig. 1A, the punching die 11 includes a base plate 12, a plurality of punching blades 13 supported by the base plate 12, and elastic members 14 adhered to the base plate 12. The elastic members 14 are elastically deformed in a reversible manner when pressed. The punching die 11 punches a sheet of an inorganic fiber mat 16 to cut out a holding seal member 15 for winding around a filter member 42, which functions as an exhaust gas purifier body.

The punching die 11 of the preferred embodiment cuts out a plurality of holding seal members 15 from a sheet of inorganic fiber mat 16. The holding seal member 15 is strip-shaped and has a tab 15b and a socket 15a. The holding seal member 15 has a uniform thickness.

The inorganic fiber mat 16 has a uniform thickness and is formed from a felt or nonwoven fabric having a uniform resilience. The inorganic fiber mat 16 is preferably made of ceramic fibers such as silica fibers, alumina fibers, mixed fibers of silica and alumina, and glass fibers. The inorganic fiber mat 16 may be impregnated with an organic binder before the cutting to give the mat a predetermined thickness and repulsive force. The organic binder may be a water-soluble resin such as acrylic resin or polyvinyl alcohol, or latex such as acrylic rubber or nitrile rubber. The thickness of the holding seal member 15 is determined in accordance with the type of the inorganic fiber mat 16, the type of catalyst carrier, and the type of exhaust gas purifier body. The inorganic fiber mat 16 may be needle-punched for reducing bulkiness (thickness).

The base plate 12 is made of wood or plywood such as veneer. The base plate 12 has a processing surface 12a. The punching blades 13 project orthogonally from the processing surface 12a. The processing surface 12a the base plate 12 is arranged in parallel with a support table 17 supporting the inorganic fiber mat 16 during the punching operation. The base plate 12 reciprocates toward and away from the support table 17. The punching blades 13 cut out a plurality of holding seal members 15 from the inorganic fiber mat 16, which is located at a punching area S, through a single punching operation. The size of the base plate 12 is determined in accordance with the size of the punching area S. Blade grooves 12b are formed in the processing surface 12a of the base plate 12 to receive the basal ends 13b of the punching blades 13. The blade grooves 12b are formed through, for example, laser processing.

The punching blades 13 are fabricated by bending a metal band in accordance with the shape of the holding seal members 15. The punching blades 13 each have a cutting edge 13a shaped in accordance with the holding seal member 15 and a basal end 13b inserted into the blade groove 12b. The punching blades 13 are, for example, lattice-shaped and include connection end formation blades (lateral blades) 18, which form the sockets 15a and tabs 15b of the holding seal members 15, side formation blades (longitudinal blades) 19, which form longitudinal sides of the holding seal members 15. Each lateral blade 18 has a cutting edge which is bent in accordance with the shape of the sockets 15a and the tabs 15b. Each longitudinal blade 19 has a linear cutting edge. The lateral blades 18 and the longitudinal blades 19 are welded together at a plurality of joints 13c. During a single punching operation, each lateral blade 18 forms a connection end, or a socket 15a, in one of two adjacent holding seal members 15, and a connection end, or a tab 15b, in the other one of the two adjacent holding seal members 15. Each longitudinal blade 19 forms the longitudinal sides of two adjacent holding seal members 15 at the same time. Thus, a plurality of holding seal members 15 and the remaining peripheral portion are cut out from a sheet of inorganic fiber mat 16 by the punching blades 13. When using the punching die 11 shown in Fig. 1, thirty-six holding seal members 15 may be formed simultaneously.

While the thickness of the punching blades 13 is not limited to any specific value, the thickness is 0.5 through 1.5 mm, preferably 0.8 through 1.2 mm, and more preferably 1.0 mm. The punching blades 13 have high durability and resist breakage when having a thickness of 0.5 mm or more. When the thickness is 1.5 mm or less, the punching blades 13 may easily be formed by bending a metal band without affecting the shape of the holding seal members 15. Each cut-out holding seal member 15 will not be caught tightly between the punching blades 13 enclosing each holding seal member 15 if the punching blades 13 have the proper thickness. Accordingly, the cut-out holding seal members 15 can be easily pushed out of the punching die 11 by the elastic members 14. The height (h) from the processing surface 12a of the base plate 12 to the cutting edge 13a of each punching blade 13 is determined in accordance with the thickness and material of the holding seal members 15.

The elastic members 14 attached to the processing surface 12a of the base plate 12 push out each holding seal member 15 enclosed and held by the punching blades 13 towards the support table 17 when the punching blades 13 are moved away from the support table 17. The elastic members 14 are elastic layers having a uniform thickness (t). The thickness (t) is preferably greater than the height (h) of the punching blades. If the thickness (t) of the elastic members 14 is less than the height (h) of the punching blades 13, wear will occur in the elastic members 14 due to repetitive punching operations. In such a case, the holding seal members 15 will not be sufficiently pushed out. However, if the thickness of the elastic members 14 is much greater than the height (h) of the punching blades 13, this would cause irreversible compressive deformation of the holding seal members 15. Therefore, the thickness of the elastic members 14 should be varied in accordance with the thickness of the holding seal members 15 and the height of the punching blades 13. Preferably, the thickness of the elastic members 14 is set to 10 mm or less, and more preferably, to 3 to 7 mm.

The material for the elastic members 14 is not especially limited as long as it is an elastic material that is elastically deformed in a reversible manner when pressed. The material for the elastic members 14, for example, may be nonwoven fabric or felt made of organic or inorganic fibers, or foam made of an expandable material. When using foam, fibers do not become entangled in the holding seal members. Foams usable for the elastic members 14 include synthetic foam, such as polyurethane foam, polyester foam, melamine resin foam, phenolic resin foam, polyethylene foam, polypropylene foam, polystyrene foam, natural rubber foam, synthetic rubber foam, and elastomeric foam. The elastic members 14 may be made from either a single elastic material or a combination of two or more elastic materials. The elastic members 14 may be made of either a single layer or laminated layers of the same or different elastic materials.

The present inventors have checked the wear rate for various elastic materials. The wear rate of each elastic material was computed by measuring the reduction percentage in compression load before and after the elastic material was compressed and decompressed repeatedly for 100 times. A low wear rate indicates that the material is restorable to its original shape and size. The results show that synthetic rubber foam exhibited the lowest wear rate when subjected to the repeated compression. Consequently, it is most preferable that the elastic members 14 be made of synthetic rubber foam. It is preferable that the wear rate of the elastic members 14 be lower. The wear rate for synthetic rubber foam was 2% or less. An elastic material having a high wear rate will be compressed in an irreversible manner through successive punching operations. Thus, the holding seal members 15 will not be sufficiently pushed out.

The compression load deflection at 25% for the elastic members 14 is 25 through 120 kPa, preferably 30 through 100 kPa, and more preferably 40 through 60 kPa. The compression load deflection at 25% was measured in accordance with American Society For Testing and Materials (ASTM) D1056. Elastic members having a compression load deflection at 25% of 25 to 120 kPa will generate enough repulsive force to push out the holding seal members 15 held by the punching blades 13 and will be soft enough so that it does not change the characteristics or shape of the holding seal members 15 during punching.

The punching blades 13 define a plurality of partitioned sections, each having the shape of the holding seal members 15. The elastic members 14 are arranged within the partitioned sections on the processing surface 12a of the base plate 12. The elastic members 14 are also arranged at the outer side of the punching blades 13 on the processing surface 12a. The elastic members 14 located in the partitioned sections function to push out the holding seal members 15, which have been pressed into the partitioned sections, from the punching die 11. The elastic member 14 located outside the punching blades 13 push out the peripheral portion of the punched inorganic fiber mat 16 from the punching die 11.

The elastic members 14 are attached to substantially the entire processing surface 12a, except for where the punching blades 13 are located, with a two-sided adhesive tape or an adhesive agent. As shown in Fig. 2, the elastic members 14 preferably do not contact the punching blade 13. Preferably, each of the elastic members 14 is separated from the side surface of the punching blade 13 by a distance of zero to 10 mm to define gap 20 therebetween. If the gap 20 is 10 mm or greater, the holding seal members 15 will be apt to get caught in the gap 20 and will become difficult to be forced out of the gap 20. This may result in deformation of the holding seal members 15. If the gap 20 is greater than zero mm, the repulsive force of the elastic member 14 would not be reduced by frictional resistance between the side surface of elastic member 14 and the side surface of the punching blade 13. More preferably, the gap 20 is five mm. If the gap 20 is five mm, the repulsive force of the elastic member 14 would not be reduced by frictional resistance between the side surfaces of the elastic member 14 and the punching blade 13. Moreover, the repulsive force of the elastic member 14 will act on substantially the entire surface of the holding seal member 15.

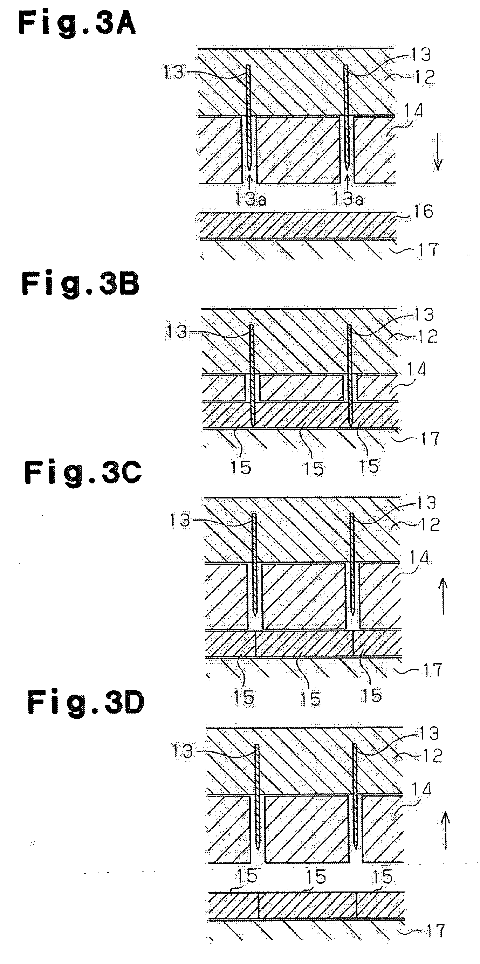

The operation of the punching die 11 will now be described with reference to Figs. 3A to 3D.

An inorganic fiber mat 16 having a predetermined thickness and repulsive force is placed on the support table 17. The inorganic fiber mat 16 is positioned in the punching area S of the punching die 11. The punching die 11 is lowered while being kept parallel with the support table 17 (Fig. 3A). During the lowering of the punching die 11, the elastic members 14 first come into contact with the inorganic fiber mat 16. The inorganic fiber mat 16 is thus held between the elastic members 14 and the support table 17. As the punching die 11 is further lowered, the elastic members 14 are compressed and the cutting edges 13a of the punching blades 13 come into contact with the upper surface of the inorganic fiber mat 16. From this state, when the punching die 11 is further lowered, the cutting edges 13a of the punching blades 13 come into contact with the support table 17 and the holding seal members 15 are cut out from the inorganic fiber mat 16. The holding seal members 15 are pressed into the partitioned sections and compressed for an amount corresponding to the thickness of the punching blades 13. When the punching die 11 is raised (Fig. 3C), the holding seal members 15 are pushed out (released) from the partitioned sections by the repulsive force of the elastic members 14. By this time, the cutting edges 13a of the punching blades 13 have been moved away from the inorganic fiber mat 16. However, the inorganic fiber mat 16 is still held between the elastic members 14 and the support table 17. This keeps the inorganic fiber mat 16 in its original shape as before the punching. Furthermore, the plurality of holding seal members 15 and the peripheral portion of the inorganic fiber mat 16 obtained by the punching are kept in a neatly arranged manner and are not scattered apart. The punching die 11 is further raised until the elastic members 14 are moved away from the inorganic fiber mat 16 (Fig. 3D). The support table 17 is then conveyed to the next process. The lowering and raising of the punching die 11 may be performed in cooperation with the movement of a belt conveyor conveying the support table 17. In this case, the punching die 11 may consecutively punch the inorganic fiber mat 16.

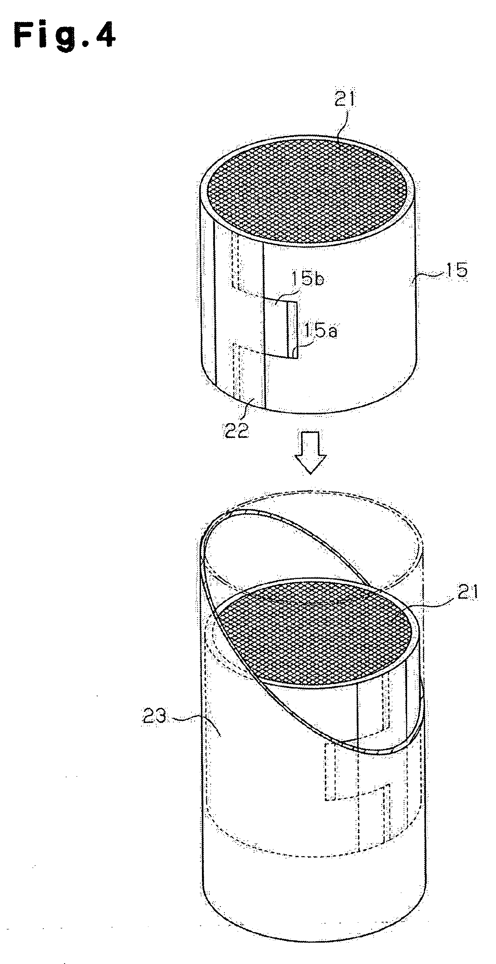

The assembling of the exhaust gas treatment apparatus will now be described with reference to Fig. 4. In the first step, a holding seal member 15 is wound around an exhaust gas purifier body such as a catalyst carrier 21. The tab 15b is fitted in the socket 15a of the holding seal member 15. In this manner, the holding seal member 15 can be wound around the entire circumference of the catalyst carrier 21 without the ends of the holding seal member 15 overlapping each other.

The catalyst carrier 21, to which the holding seal member 15 is wound around, is pressed into a tubular metal shell 23. The holding seal member 15 is elastically compressed when pressed into the tubular shell 23. The catalyst carrier 21 is held in the tubular shell 23 by the repulsive force of the holding seal member 15. The holding seal member 15 also functions as a protective cushion preventing the catalyst carrier 21 from being hit against the tubular shell 23 by vibrations transmitted from the outer side.

The preferred embodiment has the advantages described below.
(1) The elastic members 14 attached to the processing surface 12a are elastically deformed in a reversible manner when pressed. The repulsive force of the elastic members 14 makes it easy to release the punched-out holding seal members 15 from the punching die.
(2) The elastic members 14 used in the preferred embodiment generate appropriate repulsive force. This makes it easier to cut out the holding seal members 15 from the inorganic fiber mat 16 than when they are cut with scissors or a knife.
(3) The elastic members 14 are arranged in the partitioned sections of the punching die 11. The punched out holding seal members 15 are pushed out of the partitioned sections of the punching die 11 by the repulsive force of the elastic members 14. This eliminates the need for removing the punched out holding seal members 15 from the partitioned sections of the punching die 11. Thus, the holding seal members 15 are prevented from being damaged when removed from the die.
(4) The elastic members 14 have an adjusted compression load deflection at 25% and a uniform thickness. Therefore, the characteristics of the holding seal members 15 are not changed when pressed by the elastic members 14.
(5) The holding seal members 15 are removed from the partitioned sections without the need of complicated equipment such as piping and a pump as used in the prior art for supplying compressed air to the partitioned sections.
(6) The elastic members 14 having a uniform thickness come into contact uniformly and in parallel with the inorganic fiber mat 16 during the punching operation. Therefore, the punched out holding seal members 15 are kept neatly arranged and are not scattered apart. This eliminates the need to neatly arrange the holding seal members 15 before being shipped out of the factory.
(7) The elastic members 14 are arranged on substantially the entire processing surface 12a except for where the blade grooves 12b are located. This enables the entire surface of the holding seal members 15 to be uniformly pushed out.
(8) When the elastic members 14 are made of synthetic rubber foam, the repulsive force is maintained for a long period of time. This is preferable for repeated use in consecutive punching operations.
(9) The inorganic fiber mat 16 placed on the support table 17 is positioned to face the punching blades 13 immediately before a punching operation. This prevents production of defective holding seal members.
(10) The elastic member 14 is also arranged on the processing surface 12a at positions facing the peripheral portion of the inorganic fiber mat 16. This prevents the peripheral portion of the inorganic fiber mat 16 from being displaced. Plural sheets of punched inorganic fiber mats 16 may be stacked so as to simultaneously remove only their peripheral portions.
(11) When the inorganic fiber mat 16 is made of alumina fibers, the holding seal members 15 obtained from the mat will have high repulsive force and hold the catalyst carrier 21 with high reliability. When an inorganic fiber mat 16 made of alumina fibers is used, it is preferable to use elastic members 14 having a specific compression load deflection at 25%.
(12) A holding seal member 15 cut out by the punching die 11 has uniform cut surfaces and a uniform thickness. Thus, the socket 15a and the tab 15b are identically shaped. This manufactures the holding seal member 15 so that it perfectly fits into the catalyst carrier 21.

The preferred embodiment may be modified as described below.

The base plate 12 may be made of a metal material.

The blade grooves 12b may be formed partially or entirely in the processing surface 12a of the base plate 12 in correspondence with the punching blades 13. The punching blades 13 may each be fastened to the base plate 12 by a fastener such as a screw or a bolt.

A through hole may be formed in the base plate 12 to communicate with the blade groove 12b. The stability and durability of the punching blade 13 would be improved by inserting part of the punching blade 13 into the through hole.

The contact surfaces (pressing surfaces) of the elastic members 14 that come into contact with the inorganic fiber mat 16 need not necessarily be flat. As long as the desired repulsive force is maintained, the contact surfaces of the elastic members 14 may be mound-shaped or curved and may include grooves, recesses, or projections.

The support table 17 may be raised and lowered instead of the punching die 11.

The punching die 11 cuts out severol holding seal members 15 from a single sheet of inorganic fiber mat 16.

The material for the support table 17 is not limited. Any material may be used as long as it is capable of supporting the inorganic fiber mat 16 in parallel and does not damage the cutting edges 13a. The material for the support table 17 may be, for example, a laminated body of a resin such as polypropylene resin, rubber, foam, or fibers, or a laminated body coated with such resin, rubber, foam, or fibers.

The holding seal member 15 may also be wound around a diesel particulate filter (DPF) in addition to the catalyst carrier 21 but.

Test examples of the holding seal members will now be described.

A punching die having punching blades 13 and elastic members 14 arranged in the partitioned sections defined by the punching blades 13 was prepared for each of test examples 1 to 7. The elastic members used in test examples 1 to 7 were made of urethane foam and had a compression load deflection at 25% (CLD@25) as shown in Table 1 below. The thickness of the holding seal members obtained by each punching die was measured. The results are shown in table 1, which is shown below.

**Table 1**

| Test Example | CLd@25 (kPa) | Experiment 1 | | | Experiment 2 | | |
|---|---|---|---|---|---|---|---|
| | | Number of Successful Push Outs / Number of Punching Operations | Thickness (mm) | Significant Difference | Number of Successful Push Outs / Number of Punching Operations | Thickness (mm) | Significant Difference |
| Comparative Example | - | - | 6.42 | - | - | 6.45 | - |
| 1 | 21 | 1/10 | 6.45* | - | 0/10 | 6.48* | - |
| 2 | 25.2 | 8/10 | 6.42 | None | 0/10 | 6.55* | - |
| 3 | 30.1 | 10/10 | 6.38 | None | 9/10 | 6.40 | None |
| 4 | 50.8 | 10/10 | 6.43 | None | 10/10 | 6.44 | None |
| 5 | 100.3 | 10/10 | 6.48 | None | 10/10 | 6.38 | Observed |
| 6 | 119.8 | 10/10 | 6.35 | None | 10/10 | 6.35 | Observed |
| 7 | 131.2 | 10/10 | 6.27 | Observed | 10/10 | 6.27 | Observed |

### Extrudability Test

An alumina fiber mat 16 placed on a support table 17 was punched out with the punching dies of test examples 1 to 7. The punching was performed ten times for each test example. The number of times in which the holding seal members 15 were successfully pushed out from the partitioned sections was counted.

The measurement of compression load deflection at 25% was conducted in compliance with ASTM D1056.

In experiment 1, partitioned sections having a rectangular shape of 300 mm x 80 mm were defined by the punching blades 13. An elastic member having the same thickness (t) as the height (h) of the punching blades 13 was adhered to substantially the entire surface of each of the partitioned sections.

In experiment 2, partitioned sections having a rectangular shape of 50 mm x 50 mm were defined by the punching blades 1.3. An elastic member having the same thickness (t) as the height (h) of the punching blades 13 was adhered to substantially the entire surface of each of the partitioned sections.

In the comparative example, a knife was used instead of the punching die 11 to cut out the holding seal members from the mat 16.

### Thickness of Holding Seal Members

The thickness of the holding seal members of test examples 1 to 7 and comparative example were measured under a fixed load. An average of the thicknesses of the holding seal members produced by ten punching operations was obtained for each test example. Checking was conducted for a significant difference between the average thickness of the holding seal members of each test example and the thickness of the holding seal member of the comparative example.

As apparent from the results shown in table 1, in experiment 1, the thickness of the holding seal member was reduced significantly when using elastic members having a compression load deflection at 25% of 120 kPa or greater. If the holding seal member, which is too thin, is wound around a catalyst carrier, the catalyst carrier is apt to being displaced and a gap easily forms between the catalyst carrier and the shell. In experiment 1, it was ascertained that the possibility of failure in pushing out the holding seal members was increased when using elastic members having a compression load deflection at 25% of less than 25 kPa.

In experiment 2, it was ascertained that there was a significant difference in the thickness of the holding seal members compared to the comparative example when using elastic members having a compression load deflection at 25% of 100 kPa or greater. It is believed that this is because the holding seal members, which are relatively small in size, are more susceptible to pressure from the elastic members during punching operations. In experiment 2, it was ascertained that the possibility of failure in pushing out the holding seal members was increased when using elastic members having a compression load deflection at 25% of less than 30 kPa. It is believed that this is because the holding seal members are than those of experiment 1, while the ratio of the thickness of the punching blades to the size of the holding seal members is greater than that of experiment 1. Therefore, the holding seal members are held between the punching blades more tightly than in experiment 1. The reduction in the possibility of successful push outs and the dimension error (thickness) may deteriorate the productivity of the holding seal members.

It should be apparent to those skilled in the art that the present invention may be embodied in many other specific forms without departing from the invention as defined by claims. Therefore, the present examples and embodiments are to be considered as illustrative and not restrictive, and the invention is not to be limited to the details given herein.

## Claims

1. Use of a punching die (11) for punching a sheet of an inorganic fiber mat (16) to manufacture a plurality of holding seal members (15), the punching die including a base plate (12)having a processing surface (12a); and a lattice-shaped punching blade (13) projecting orthogonally from the processing surface (12a) and supported by the base plate, for punching the inorganic fiber mat to cut out the plurality of holding seal members and a remaining peripheral portion, the punching die comprising:
a plurality of elastically deformable elastic members (14) attached to the base plate to substantially the entire processing surface (12a) except for where the punching blade (13) is located, the elastic members are also arranged on the processing surface (12a) at an outer side of the punching blade (13), at positions facing the peripheral position, wherein each of the elastic members is separated from a side surface of the punching blade (13) by a distance up to 10 mm and wherein the elastic members are compressed and produce repulsive force to push the holding seal member out of the punching die when punching the inorganic fiber mat.

2. Use of the punching die according to claim 1, wherein the elastic members are made of a foam material.

3. Use of the punching die according to claim 2, wherein the foam material is made of at least one selected from the group consisting of polyurethane foam, polyester foam, melamine resin foam, phenolic resin foam, polyethylene foam, polypropylene foam, polystyrene foam, natural rubber foam, synthetic rubber foam, and elastomer foam.

4. Use of the punching die according to claim 1, wherein the elastic members have a uniform thickness and a compression load deflection at 25% of 25 kPa through 120 kPa.

5. Use of the punching die according to claim 4, wherein the elastic members have a thickness equal to or greater than the height of the punching blades.

6. Use of the punching die according to any one of claims 1 to 5, wherein the inorganic fiber mat is made of alumina fibers.

7. Use of the punching die according to any one of claims 1 to 5, wherein the punching blade and the elastic members are arranged to face a support table supporting the inorganic fiber mat, and the punching blade cuts the inorganic fiber mat held between the elastic members and the support table, and wherein the cut inorganic fiber mat (16) is still held between the elastic members (14) and the support table (17) by the time the punching blade 813) has been moved away from the inorganic fiber mat (16).

## Patentansprüche

1. Verwendung einer Stanzform (11) zum Stanzen eines Blatts einer Matte aus anorganischen Fasern (16) zur Herstellung einer Vielzahl von Haltedichtelementen (15), wobei die Stanzform eine Basisplatte (12), die eine Bearbeitungsoberfläche (12a) aufweist; und eine gitterförmige Stanzklinge (13) enthält, die senkrecht von der Bearbeitungsoberfläche (12a) hervorsteht und von der Basisplatte getragen wird, zum Stanzen der Matte aus anorganischen Fasern, um die Vielzahl von Haltedichtelementen und einen verbleibenden Umfangsabschnitt auszuschneiden, wobei die Stanzform umfasst:
eine Vielzahl von elastisch verformbaren Elastikelementen (14), die an der Basisplatte auf im Wesentlichen der gesamten Bearbeitungsoberfläche (12a) angebracht sind, mit Ausnahme dort wo die Stanzklinge (13) angeordnet ist, wobei die Elastikelemente ferner auf der Verarbeitungsoberfläche (12a) an einer Außenseite der Stanzklinge (13) an Positionen, die der Umfangsposition zugewandt sind, angeordnet sind, wobei jede der Elastikelemente von der Seitenoberfläche der Stanzklinge (13) um einen Abstand bis zu 10 mm getrennt ist, und wobei die Elastikelemente komprimiert sind und eine abstoßende Kraft erzeugen, um das Haltedichtelement aus der Stanzform zu drücken, wenn die Matte aus anorganischen Fasern gestanzt wird.

2. Verwendung der Stanzform nach Anspruch 1, wobei die Elastikelemente aus einem Schaummaterial gefertigt sind.

3. Verwendung der Stanzform nach Anspruch 2, wobei das Schaummaterial zumindest aus einem gefertigt ist, das aus der Gruppe ausgewählt ist, die aus Polyurethanschaum, Polyesterschaum, Melaminharzschaum, Phenolharzschaum, Polyethylenschaum, Polypropylenschaum, Polystyrolschaum, Naturgummischaum, Synthetikgummischaum und Elastomerschaum besteht.

4. Verwendung der Stanzform nach Anspruch 1, wobei die Elastikelemente eine gleichförmige Dicke und eine Kompressionslastablenkung bei 25% von 25 kPa bis 120 kPa aufweisen.

5. Verwendung der Stanzform nach Anspruch 4, wobei die Elastikelemente eine Dicke aufweisen, die gleich oder größer als die Höhe der Stanzklingen ist.

6. Verwendung der Stanzform nach einem der Ansprüche 1 bis 5, wobei die Matte aus anorganischen Fasern aus Aluminiumoxidfasern gefertigt ist.

7. Verwendung der Stanzform nach einem der Ansprüche 1 bis 5, wobei die Stanzklinge und die Elastikelemente angeordnet sind, um einem Unterstützungstisch zugewandt zu sein, der die Matte aus anorganischen Fasern trägt, und die Stanzklinge die Matte aus anorganischen Fasern schneidet, die zwischen den Elastikelementen und dem Unterstützungstisch gehalten wird, und wobei die geschnittene Matte aus anorganischen Fasern (16) zwischen den Elastikelementen (14) und dem Unterstützungstisch (17) zur Zeit, wenn die Stanzklinge (13) von der Matte aus anorganischen Fasern (16) weg bewegt wurde, noch gehalten wird.

## Revendications

1. Utilisation d'une matrice de poinçonnage (11) pour poinçonner une feuille d'un mat de fibres inorganiques (16) dans le but de fabriquer une pluralité de joints d'étanchéité et de maintien (15), la matrice de poinçonnage incluant une plaque de base (12) disposant d'une surface de traitement (12a); et une lame de poinçonnage en treillis (13) se projetant orthogonalement depuis la surface de traitement (12a) et soutenue par la plaque de base, pour poinçonner le mat de fibres inorganiques afin de découper la pluralité de joints d'étanchéité et de maintien et une partie périphérique restante, la matrice de poinçonnage comprenant:
une pluralité d'éléments élastiques (14) élastiquement déformables fixés à la plaque de base essentiellement à toute la surface de traitement (12a) à l'exception de l'endroit où la lame de poinçonnage (13) est située, les éléments élastiques sont également agencés sur la surface de traitement (12a) à un côté extérieur de la lame de poinçonnage (13), à des positions regardant la position périphérique, où chacun des éléments élastiques est séparé d'une surface latérale de la lame de poinçonnage (13) par une distance allant jusqu'à 10 mm et où les éléments élastiques sont comprimés et produisent une force de répulsion pour expulser le joint d'étanchéité et de maintien de la matrice de poinçonnage lors du poinçonnage du mat de fibres inorganiques.

2. Utilisation de la matrice de poinçonnage selon la revendication 1, où les éléments élastiques sont réalisés en un matériau en mousse.

3. Utilisation de la matrice de poinçonnage selon la revendication 2, où le matériau en mousse est réalisé à partir d'un élément au moins sélectionné parmi le groupe consistant en une mousse de polyuréthane, une mousse de polyester, une mousse de résine de mélamine, une mousse de résine phénolique, une mousse de polyéthylène, une mousse de polypropylène, une mousse de polystyrène, une mousse de caoutchouc naturel, une mousse de caoutchouc synthétique, et une mousse élastomère.

4. Utilisation de la matrice de poinçonnage selon la revendication 1, où les organes élastiques ont une épaisseur uniforme et une déformation sous charge de compression à 25% de 25 kPa jusqu'à 120 kPa.

5. Utilisation de la matrice de poinçonnage selon la revendication 4, où les éléments élastiques ont une épaisseur égale à ou plus grande que la hauteur des lames de poinçonnage.

6. Utilisation de la matrice de poinçonnage selon l'une quelconque des revendications 1 à 5, où le mat de fibres inorganiques est réalisé en fibres d'alumine.

7. Utilisation de la matrice de poinçonnage selon l'une quelconque des revendications 1 à 5, où la lame de poinçonnage et les éléments élastiques sont agencés pour regarder une table de support soutenant le mat de fibres inorganiques, et la lame de poinçonnage découpe le mat de fibres inorganiques maintenu entre les éléments élastiques et la table de support, et où le mat de fibres inorganiques découpé (16) est toujours maintenu entre les éléments élastiques (14) et la table de support (17) au moment où la lame de poinçonnage (13) a été écartée du mat de fibres inorganiques (16).
